# EUROPEAN PATENT SPECIFICATION

(11) **EP 4 206 598 B1**
(45) Date of publication and mention of the grant of the patent: **09.04.2025**
(21) Application number: 20950919.9
(22) Date of filing: 31.08.2020
(51) Int. Cl.: F28D 1/04, F28D 1/02, F28F 9/24, F28F 1/32, B21D 53/08, B21D 53/02, B21D 11/00, F25B 39/00

(54) **HEAT EXCHANGER AND PROCESSING METHOD THEREFOR**
WÄRMETAUSCHER UND VERARBEITUNGSVERFAHREN DAFÜR
ÉCHANGEUR DE CHALEUR ET SON PROCÉDÉ DE TRAITEMENT

(43) Date of publication of application: 05.07.2023
(73) Proprietor: Sanhua (Hangzhou) Micro Channel Heat Exchanger Co. Ltd, Hangzhou, Zhejiang 310018 (CN)
(72) Inventor: WANG, Feng, Hangzhou Economic Development Area Hangzhou, Zhejiang 310018 (CN); JIANG, Jianlong, Hangzhou Economic Development Area Hangzhou, Zhejiang 310018 (CN); GAO, Qiang, Hangzhou Economic Development Area Hangzhou, Zhejiang 310018 (CN)
(74) Representative: Stöckeler, Ferdinand
(86) International application number: PCT/CN2020/112685
(87) International publication number: WO 2022/041250

(56) References cited:
- EP-A1- 2 884 209
- WO-A1-2015/037235
- CN-A- 104 713 387
- CN-A- 109 269 341
- CN-U- 201 731 683
- CN-U- 201 731 683
- CN-U- 203 274 364
- CN-U- 203 286 911
- JP-A- 2010 169 289
- US-A1- 2016 290 736
- US-A1- 2017 343 288

## Description

### TECHNICAL FIELD

Embodiments of the present disclosure relate to a field of air conditioning heat exchange, and more particularly, to a heat exchanger and a method for processing a heat exchanger. More specifically, the present invention relates to a heat exchanger as defined in the preamble of claim 1, and as illustrated in CN 104 713 387 A.

### BACKGROUND

At present, a multi-channel heat exchanger is widely used in the field of air conditioning and refrigeration. In the related art, the multi-channel heat exchanger includes a plurality of heat exchange tubes, the plurality of heat exchange tubes include a bent section, and no fin is arranged in the bent section. In the bent section, parts of adjacent bent sections are overlapped with each other in a thickness direction of the heat exchange tube. After the heat exchanger is mounted and used, the overlapped parts of the tubes tend to accumulate water and dust. In addition, in the bending process during the manufacturing or mounting of the heat exchanger, the overlapped parts of the adjacent heat exchange tubes may rub against each other, thus reducing the reliability of the heat exchange tubes.

### SUMMARY

To this end, embodiments of an aspect of the present disclosure propose a heat exchanger, which reduces the risk of mutual friction between adjacent bent sections during the bending operation of the heat exchanger, reduces the accumulation of dust and water during the use of the heat exchanger, and is conducive to improving the reliability of the heat exchange tube.

The embodiments of another aspect of the present disclosure further propose a method for processing a heat exchanger.

A heat exchanger according to the embodiments of a first aspect of the present disclosure includes: a first header and a second header; a plurality of heat exchange tubes spaced apart along a length direction of the first header, the heat exchange tube communicating the first header with the second header, the heat exchange tube being flat, the heat exchange tube including a first face and a second face arranged along a thickness direction of the heat exchange tube, the heat exchange tube including a third face and a fourth face arranged along a width direction of the heat exchange tube, an intersection portion of the first face and the third face being a first side edge, the heat exchange tube including a first section, a bent section and a second section, a first end of the first section of the heat exchange tube being connected to a first end of the bent section, a second end of the first section being in communication with the first header, a first end of the second section of the heat exchange tube being connected to a second end of the bent section, a second end of the second section being in communication with the second header, a length direction of the first section and a length direction of the second section define an included angle therebetween, and adjacent bent sections in a thickness direction of the bent section being spaced apart; and a fin including a first fin and a second fin, the first fin being arranged between adjacent first sections in the length direction of the first header, the second fin being arranged between adjacent second sections in the length direction of the first header, and no fin being arranged between adjacent bent sections in the length direction of the first header. The bent section of the heat exchanger includes a section to be bent before bending, the section to be bent includes a protruding section and at least two transition sections, a first end of the protruding section is connected to a first end of one transition section, a second end of the one transition section is connected to the first end of the first section, a second end of the protruding section is connected to a first end of another transition section, and a second end of the other transition section is connected to the first end of the second section. A plane parallel to the length direction of the first header and parallel to the length direction of the first section, and also perpendicular to a width direction of the first section is defined as a first plane before the bent section is bent. In the first plane, a projection line of a first side edge of the protruding section of the heat exchange tube is not collinear with a projection line of a first side edge of the first section of the heat exchange tube, a minimum distance from the projection line of the first side edge of the protruding section of the heat exchange tube to the projection line of the first side edge of the first section of the heat exchange tube is H, and a minimum distance from the projection line of the first side edge of the first section of the heat exchange tube to the projection line of the first side edge of the first section of another adjacent heat exchange tube in the length direction of the first header is L, and H is greater than or equal to L.

In the heat exchanger according to the embodiments of the present disclosure, the first fin is arranged between the first sections of adjacent heat exchange tubes and the second fin is arranged between the second sections of adjacent heat exchange tubes, so that the plurality of heat exchange tubes are arranged side by side on the first header and the second header at a same interval along the length direction of the first header. A spacing between the adjacent heat exchange tubes is L. The bent section of the heat exchange tube is translated by a distance of H along the length direction of the first header before bending, in which H is greater than or equal to L, and then the heat exchange tube is bent. Therefore, adjacent bent sections are not in contact with each other in the thickness direction of the bent section after bending, and the risk of mutual friction between adjacent bent sections is reduced during bending operation, thus improving the reliability of the heat exchange tube.

In some embodiments, H is less than 5 times Tw, in which Tw is a width of the heat exchange tube.

In some embodiments, H is greater than or equal to 1.5 times L.

In some embodiments, the protruding section includes a first straight section at least in part before the bent section of the heat exchanger is bent, a length direction of the first straight section is generally parallel to the length direction of the first section, and the plurality of heat exchange tubes have consistent directions from first faces of their respective first sections to first faces of their respective first straight sections.

In some embodiments, the first straight section has a length of C before bending, the heat exchange tube has a length of A before the bent section of the heat exchange tube is bent, and C is less than or equal to 0.5 times A.

In some embodiments, before the bent section of the heat exchanger is bent, the protruding section includes a first arc-shaped section at least in part, and the plurality of heat exchange tubes have consistent directions from first faces of their respective first sections to first faces of their first arc-shaped sections.

In some embodiments, the transition section includes a second straight section at least in part, and a length direction of the second straight section and the length direction of the first section define an included angle therebetween, or the transition section includes a second arc-shaped section at least in part.

In some embodiments, the first fin is a corrugated fin extending in the length direction of the first section of the heat exchange tube, and/or the second fin is a corrugated fin extending in the length direction of the second section of the heat exchange tube, and a density of the first fin is different from a density of the second fin.

In some embodiments, the first fin is an insert fin extending in a thickness direction of the first section of the heat exchange tube, and/or the second fin is an insert fin extending in a thickness direction of the second section of the heat exchange tube.

A method for processing a heat exchanger according to the embodiments of a second aspect of the present disclosure includes: preparing a heat exchanger to be processed, in which the heat exchanger to be processed includes a first header, a second header, a plurality of heat exchange tubes and a fin, the plurality of the heat exchange tubes are spaced apart along a length direction of the first header, the heat exchange tube communicates the first header with the second header, the heat exchange tube includes a first face and a second face arranged in parallel in the length direction of the first header, the heat exchange tube includes a first section, a section to be bent and a second section, a first end of the first section is connected to a first end of the section to be bent, a second end of the first section is in communication with the first header, a first end of the second section is connected to a second end of the section to be bent, a second end of the second section is in communication with the second header, the fin includes a first fin and a second fin, the first fin is arranged between adjacent first sections in the length direction of the first header, the second fin is arranged between adjacent second sections in the length direction of the first header, and no fin is arranged between adjacent sections to be bent in the length direction of the first header; translating a part of the section to be bent of the heat exchange tube by a preset distance relative to the first section and the second section of the heat exchange tube along the length direction of the first header, so that the translated part of the section to be bent deviates from the first section of the heat exchange tube in the length direction of the first header; moving the first header towards the second header, and moving the second header towards the first header; and bending the section to be bent of the heat exchange tube in the length direction while reducing an included angle between the first section and the second section of the heat exchange tube to a predetermined angle, after translating the part of the section to be bent by the preset distance.

In the method for processing the heat exchanger according to the embodiments of the present disclosure, the first fin is arranged between the first sections of adjacent heat exchange tubes and the second fin is arranged between the second sections of adjacent heat exchange tubes, so that the plurality of heat exchange tubes are arranged side by side on the first header and the second header at a same interval along the length direction of the first header. The bent section of the heat exchange tube is translated by the preset distance along the length direction of the first header before bending, and then the heat exchange tube is bent. Therefore, adjacent bent sections in the thickness direction of the bent section are spaced apart after bending, and adjacent bent sections do not rub against each other during the bending operation, thus improving the reliability of the heat exchange tube.

In some embodiments, the part of at least one of a plurality of sections to be bent is sequentially translated by the preset distance relative to the first section and the second section along the length direction of the first header, or the parts of a plurality of sections to be bent are simultaneously translated by the preset distance relative to the first section and the second section along the length direction of the first header, and the preset distance is greater than or equal to a spacing between adjacent first sections in the length direction of the first header.

In some embodiments, before the section to be bent of the heat exchange tube is bent, the section to be bent is twisted relative to the first section and the second section of the heat exchange tube along the length direction of the first header, so that a included angle between a first face of the section to be bent of the heat exchange tube and a first face of the first section of the heat exchange tube is greater than 0 degrees and less than or equal to 90 degrees.

In some embodiments, a mandrel is placed on the section to be bent and abuts against the part section of the section to be bent, when the section to be bent of the heat exchange tube is bent.

In some embodiments, bending the section to be bent of the heat exchange tube includes: bending the section to be bent of the heat exchange tube, so as to bend an angle between a length direction of the first section and a length direction of the second section to a preset angle A1; pulling out the mandrel; and continuing to bend the section to be bent of the heat exchange tube, so as to bend the angle between the length direction of the first section and the length direction of the second section to a target angle A2, among which A2≥0°, and A2 is less than A1.

A method for processing a heat exchanger according to the embodiments of a third aspect of the present disclosure includes: translating a sections of a heat exchange tube by a preset distance relative to a first end and a second end of the heat exchange tube along a thickness direction of the heat exchange tube, so that the translated sections of the heat exchange tube protrude from the first end and the second end of the heat exchange tube in the thickness direction of the heat exchange tube; arranging and spacing apart a plurality of the heat exchange tubes along the thickness direction of the heat exchange tube, in which directions, in which the sections of the plurality of the heat exchange tubes protrude from their first ends and their second end in a thickness direction of the heat exchange tube, are identical; fixedly connecting first ends of the plurality of the heat exchange tubes with a first header and fixedly connecting second ends of the plurality of the heat exchange tubes with a second header, in which the protruding sections of the plurality of the heat exchange tubes are aligned in a length direction of the first header; and in the thickness direction of the heat exchange tube, arranging a first fin and a second fin between adjacent heat exchange tubes, in which no fin is arranged between the protruding sections of the adjacent heat exchange tubes. A section of the heat exchange tube connected to the first fin is a first section, a section of the heat exchange tube connected to the second fin is a second section, and a section of the heat exchange tube, which is not connected to the first fin and the second fin, is a section to be bent.

In the method for processing the heat exchanger according to the embodiments of the present disclosure, the middle section of the heat exchange tube is first translated by the preset distance, then the translated heat exchange tube is mounted between the first header and the second header, and then the heat exchange tube is further bent. Therefore, adjacent bent sections are not in contact with each other after bending, thus reducing the risk of mutual friction between adjacent heat exchange tubes and improving the reliability of heat exchange tubes. Thus, this operation can also avoid the influence on the fixed connection between the heat exchange tube and the first header during the translation of the heat exchange tube, which is further conducive to improving the reliability and service life of the heat exchanger.

In some embodiments, the method for processing the heat exchanger further includes: fixedly connecting the heat exchange tube with the first header; fixedly connecting the heat exchange tube with the second header; fixedly connecting the heat exchange tube with the first fin; and fixedly connecting the heat exchange tube with the second fin.

In some embodiments, the method for processing the heat exchanger further includes: bending the section to be bent of the heat exchange tube in the length direction while reducing an included angle between the first section and the second section of the heat exchange tube to a predetermined angle.

In some embodiments, the heat exchange tube includes a first face and a second face arranged in parallel in the length direction of the first header, and before the section to be bent of the heat exchange tube is bent, the protruding section is twist relative to the first section and second section of the heat exchange tube along the length direction of the first header, so that an included angle between a first face of the protruding section and a first face of the first section is greater than 0 degrees and less than or equal to 90 degrees.

In some embodiments, a mandrel is placed on the protruding section and abuts against the protruding section when the protruding section of the heat exchange tube is bent; the protruding section of the heat exchange tube is bent, so as to bend an angle between a length direction of the first section and a length direction of the second section to a preset angle A1; the mandrel is pulled out; and the protruding section of the heat exchange tube continues to be bent, so as to bend the angle between the length direction of the first section and the length direction of the second section to a target angle A2, among which A2≥0°, and A2 is less than A1.

### BRIEF DESCRIPTION OF THE DRAWINGS

Fig. 1 is a front view of a heat exchanger according to an embodiment of the present disclosure.
Fig. 2 is a side view of a heat exchanger according to an embodiment of the present disclosure.
Fig. 3 is a schematic view of a heat exchanger before a section to be bent is translated according to an embodiment of the present disclosure.
Fig. 4 is a schematic view of a heat exchanger after a section to be bent is translated according to an embodiment of the present disclosure.
Fig. 5 is an enlarged schematic view of part a in Fig. 4.
Fig. 6 is a schematic view of a heat exchanger after a section to be bent is translated according to another embodiment of the present disclosure.
Fig. 7 is a schematic view of a heat exchanger after a section to be bent is translated according to still another embodiment of the present disclosure.
Fig. 8 is a perspective view of a heat exchange tube in a heat exchanger according to an embodiment of the present disclosure.
Fig. 9 is a sectional view of a heat exchange tube in a heat exchanger according to an embodiment of the present disclosure.
Fig. 10 is a partial perspective view of a fin in a heat exchanger according to an embodiment of the present disclosure.
Fig. 11 is a schematic view illustrating fixing a heat exchanger before bending in a method for processing a heat exchanger according to an embodiment of the present disclosure.
Fig. 12 is a schematic view illustrating translating a section to be bent in a method for processing a heat exchanger according to an embodiment of the present disclosure.
Fig. 13 is a schematic view of a pushing device in Fig. 12.
Fig. 14 is a schematic view illustrating that a section to be bent has been translated in a method for processing a heat exchanger according to an embodiment of the present disclosure.
Fig. 15 is a schematic view illustrating twisting a section to be bent in a method for processing a heat exchanger according to an embodiment of the present disclosure.
Fig. 16 is a schematic view illustrating a heat exchanger after twisting a section to be bent in a method for processing a heat exchanger according to an embodiment of the present disclosure.
Fig. 17 is a schematic view illustrating bending a heat exchange tube to a predetermined angle A1 in a method for processing a heat exchanger according to an embodiment of the present disclosure.
Fig. 18 is a schematic view illustrating bending a heat exchange tube to a predetermined angle A2 in a method for processing a heat exchanger according to an embodiment of the present disclosure.
Fig. 19 is a schematic view illustrating that a section to be bent of a heat exchange tube has been translated in a method for processing a heat exchanger according to another embodiment of the present disclosure.
Fig. 20 is a schematic view illustrating mounting a heat exchange tube on a first header and a second header after translating a section to be bent in a method for processing a heat exchanger according to another embodiment of the present disclosure.
Fig. 21 is a schematic view illustrating twisting a section to be bent in a method for processing a heat exchanger according to another embodiment of the present disclosure.
Fig. 22 is a schematic view illustrating a heat exchanger after twisting a section to be bent in a method for processing a heat exchanger according to another embodiment of the present disclosure.
Fig. 23 is a schematic view illustrating bending a heat exchange tube to a predetermined angle A1 in a method for processing a heat exchanger according to another embodiment of the present disclosure.
Fig. 24 is a schematic view illustrating bending a heat exchange tube to a predetermined angle A2 in a method for processing a heat exchanger according to another embodiment of the present disclosure.

### DETAILED DESCRIPTION

Embodiments of the present disclosure are described in detail below, and examples of the embodiments are shown in accompanying drawings. The following embodiments described with reference to the accompanying drawings are exemplary and are only intended to explain the present disclosure, rather than limit the present disclosure. In the description of the present disclosure, it shall be understood that terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial" and "circumferential" should be construed to refer to the orientation and position as then described or as shown in the drawings under discussion. These relative terms are only for convenience of description and do not indicate or imply that the device or element referred to must have a particular orientation, or be constructed and operated in a particular orientation. Thus, these terms shall not be construed as limitation on the present disclosure.

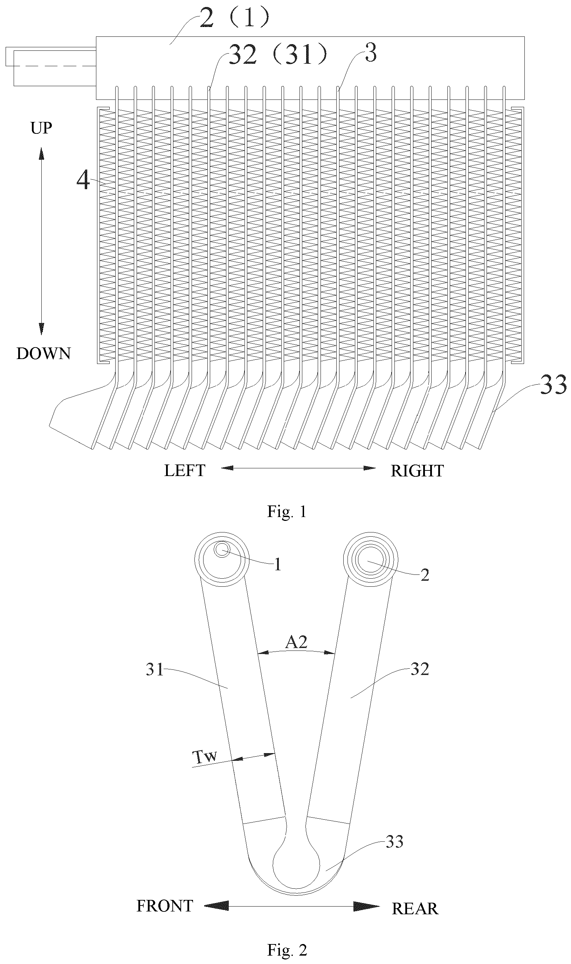

As shown in Figs. 1 to 8, a heat exchanger according to embodiments of the present disclosure includes a first header 1, a second header 2, a plurality of heat exchange tubes 3 and a fin 4.

Specifically, as shown in Fig. 1, the first header 1 and the second header 2 are juxtaposed (i.e. arranged side by side), and a length of the first header 1 is the same with a length of the second header 2.

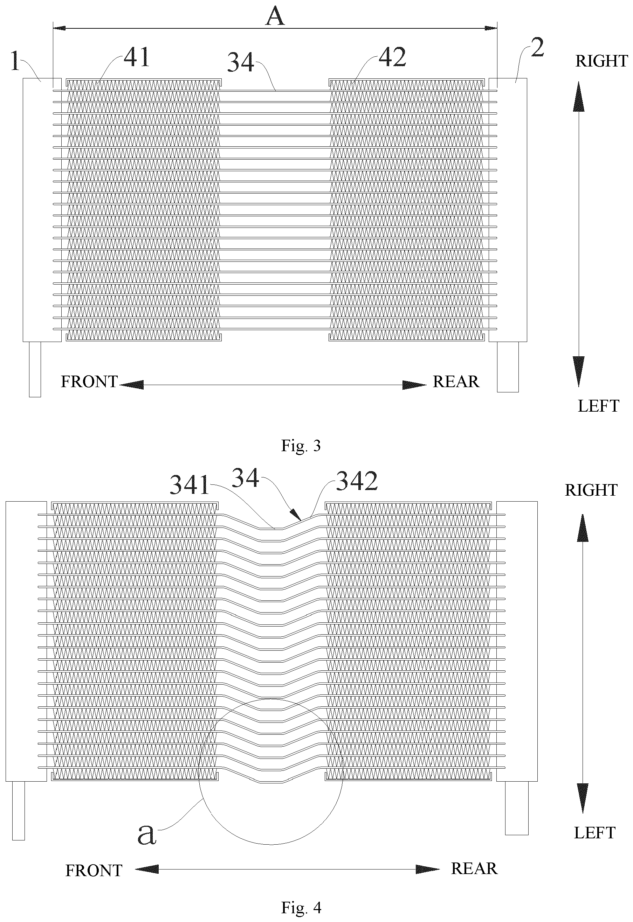

The plurality of heat exchange tubes 3 are spaced apart along a length direction of the first header 1 (a left-right direction as shown in Fig. 1). The heat exchange tube 3 communicates the first header 1 with the second header 2, and the heat exchange tube 3 is flat. The heat exchange tube 3 includes a first face (a left side face of the heat exchange tube 3 in Fig. 1) and a second face (a right side face of the heat exchange tube 3 in Fig. 1) arranged along a thickness direction (the left-right direction as shown in Fig. 1) of the heat exchange tube 3. The heat exchange tube 3 includes a third face (a front side face of the heat exchange tube 3 in Fig. 2) and a fourth face (a rear side face of the heat exchange tube 3 in Fig. 2) arranged along a width direction (a front-rear direction as shown in Fig. 2) of the heat exchange tube 3. An intersection portion of the first face and the third face is a first side edge. Referring to schematic views, in which the heat exchange tube 3 in the heat exchanger is not bent, as shown in Figs. 3 and 4, a front end of the heat exchange tube 3 is in communication with the first header 1, and a rear end of the heat exchange tube 3 is in communication with the second header 2.

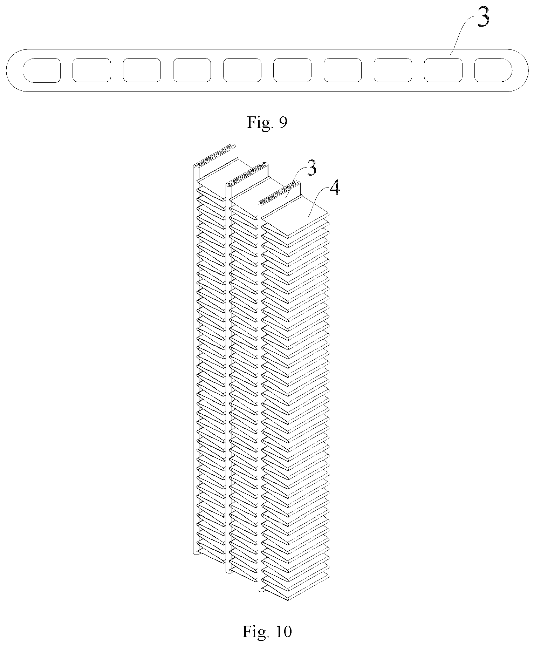

The heat exchange tube 3 includes the first face (a left side face of the heat exchange tube 3 in Fig. 1) and the second face (a right side face of the heat exchange tube 3 in Fig. 1) arranged in parallel in the length direction of the first header 1. Referring to schematic views, in which the heat exchange tube 3 in the heat exchanger is not bent, as shown in Figs. 3 to 9, the heat exchange tube 3 is generally flat, the heat exchange tube 3 has a length extending in the front-rear direction, a thickness extending in the left-right direction, and a width extending perpendicularly to the page of Fig. 3, and the following relation is satisfied: the length of the heat exchange tube 3 > the width of the heat exchange tube 3 > the thickness of the heat exchange tube 3.

The heat exchange tube 3 includes a first section 31, a bent section 33, and a second section 32. A first end of the first section 31 (a lower end of the first section 31 in Fig. 1) of the heat exchange tube 3 is connected to a first end of the bent section 33, and a second end of the first section 31 (an upper end of the first section 31 in Fig. 1) is in communication with the first header 1. A first end of the second section 32 (a lower end of the second section 32 in Fig. 1) of the heat exchange tube 3 is connected to a second end of the bent section 33, and a second end of the second section 32 (an upper end of the second section 32 in Fig. 1) is in communication with the second header 2. As shown in Fig. 2, a length direction of the first section 31 and a length direction of the second section 32 define an included angle therebetween, and adjacent bent sections 33 are spaced apart in a thickness direction of the bent section 33.

The fin 4 includes a first fin 41 and a second fin 42. The first fin 41 is arranged between adjacent first sections 31 in the length direction of the first header 1, the second fin 42 is arranged between adjacent second sections 32 in the length direction of the first header 1, and no fin is arranged between adjacent bent sections 33 in the length direction of the first header 1 (here, the length direction of the first header 1 is the same with the thickness direction of the heat exchange tube).

Referring to a schematic view, in which the heat exchange tube 3 in the heat exchanger is not bent, as shown in Fig. 4, the bent section 33 of the heat exchanger includes a section 34 to be bent before bending, and the section 34 to be bent includes a protruding section 341 and at least two transition sections 342. A first end of the protruding section 341 (a front end of the protruding section 341 in Fig. 4) is connected to a first end of one transition section 342 (a rear end of the first transition section 342 in Fig. 4), and a second end of the one transition section 342 (a front end of the first transition section 342 in Fig. 4) is connected to the first end of the first section 31 (a rear end of the first section 31 in Fig. 4). A second end of the protruding section 341 (a rear end of the protruding section 341 in Fig. 4) is connected to a first end of another transition section 342 (a front end of the second transition section 342 in Fig. 4), and a second end of the other transition section 342 (a rear end of the second transition section 342 in Fig. 4) is connected to the first end of the second section 32 (a front end of the second section 32 in Fig. 4).

A plane parallel to the length direction of the first header 1 and parallel to the length direction of the first section 31, and also perpendicular to a width direction of the first section 31 (a direction perpendicular to the page of Fig. 4) is defined as a first plane (a plane parallel to the page of Fig. 4) before the bent section 33 is bent.

In the first plane, a projection line of a first side edge of the protruding section 341 (a left side edge of the protruding section 341 in Fig. 4) of the heat exchange tube 3 is not collinear with a projection line of a first side edge of the first section 31 (a left side edge of the first section 31 in Fig. 4) of the heat exchange tube 3. A minimum distance from the projection line of the first side edge of the protruding section 341 of the heat exchange tube 3 to the projection line of the first side edge of the first section 31 of the first heat exchange tube 3 is H, a minimum distance from the projection line of the first side edge of the first section 31 of the heat exchange tube 3 to the projection line of the first side edge of the first section 31 of another adjacent heat exchange tube 3 in the length direction of the first header 1 is L, and H is greater than or equal to L.

In the heat exchanger according to the embodiments of the present disclosure, the first fin is arranged between the first sections of adjacent heat exchange tubes and the second fin is arranged between the second sections of adjacent heat exchange tubes, so that the plurality of heat exchange tubes are juxtaposed at a same interval along the length direction of the first header and are in communication with the first header and the second header. A spacing between adjacent heat exchange tubes is L. The bent section of the heat exchange tube is translated by a distance of H along the length direction of the first header before bending, H is greater than or equal to L, and then the heat exchange tube is bent.

In the heat exchanger, the section to be bent is designed to include the protruding section before bending, and a protrusion distance of the protruding section is greater than a spacing of adjacent first sections, so that the bent sections of the adjacent heat exchange tubes are spaced apart after bending, and the adjacent bent sections are not in contact with each other, thus reducing the risk of mutual friction between the adjacent bent sections during bending, and improving the reliability of the heat exchange tube.

In some applications, a surface of the heat exchange tube has a material layer containing zinc, so as to increase the corrosion resistance of the heat exchange tube. Moreover, the bent sections are spaced apart, so that the risk of damaging the zinc layer caused by mutual friction between surfaces of the adjacent bent sections during bending is reduced. During the use of the heat exchanger, a sufficient gap is defined between the bent sections of the heat exchange tubes, and no overlapping section exists, thus reducing the accumulation of moisture and dust on the bent section and decreasing the corrosion risk of the bent sections. No fin is arranged at the bent section, and hence the bent section is an area with weak corrosion resistance compared with the first section and the second section. Therefore, reducing the risk of corrosion of the bent section is conducive to the improvement of the overall reliability and the service life of the heat exchanger.

In some applications, the surface of the heat exchanger needs to be processed (electroplated or sprayed) to be covered with an anti-corrosion coating. The bent section may be completely covered with anti-corrosion coating materials, so as to improve the corrosion resistance of the heat exchanger.

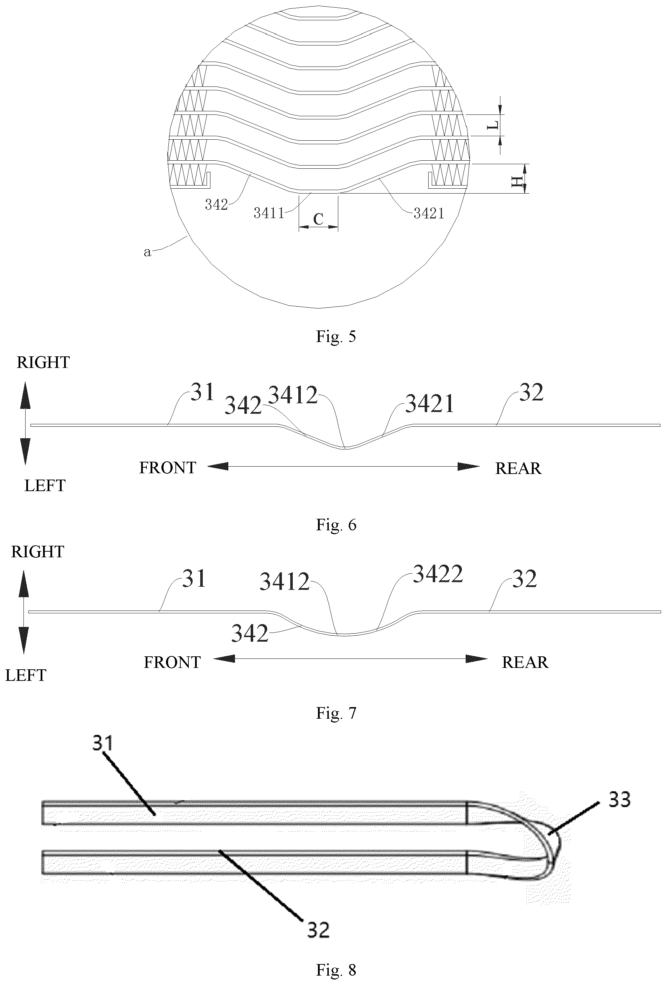

In some embodiments, as shown in Figs. 2 and 5, H is less than 5 times Tw, in which Tw is the width of the heat exchange tube 3. It can be understood that the translation distance H of the section 34 to be bent in the heat exchange tube 3 is related to the width of the heat exchange tube 3 itself. The wider the width of the heat exchange tube 3 is, the greater the translation distance needed by the section 34 to be bent is, but the translation distance of the section 34 to be bent has a negative impact on the overall heat exchange efficiency of the heat exchanger. Therefore, the following relation is satisfied: H<5Tw.

In some embodiments, as shown in Fig. 5, H is greater than or equal to 1.5 times L. Therefore, after the heat exchange tube 3 is bent, the first section 31 and the second section 32 extend in an up-down direction, and the bent section 33 extends from up to down and is inclined leftwards. Therefore, adjacent bent sections 33 in the left-right direction after bending are spaced apart, thus improving the reliability of the heat exchange tube 3.

In some embodiments, the protruding section 341 includes a first straight section 3411 at least in part before the bent section 33 is bent. That is, at least a part of the protruding section 341 is configured as the first straight section 3411 before the bent section 33 is bent. Likewise, the expressions including "at least in part" may be interpreted in a similar manner below. A length direction of the first straight section 3411 (the front-rear direction as shown in Fig. 4) is generally parallel to the length direction of the first section 31 (the front-rear direction as shown in Fig. 4), and the plurality of heat exchange tubes 3 have consistent directions from the first faces of their respective first sections 31 to the first faces of their respective first straight section 3411.

Therefore, the bent sections after bending may be inclined in a same direction, and the structural compactness of the heat exchanger can be improved. Of course, in some embodiments, the plurality of heat exchange tubes 3 may have inconsistent directions from the first faces of their respective first sections 31 to the first faces of their respective first straight sections 3411. After bending, the heat exchange tubes are inclined in different directions opposite to each other. The bent sections are spaced apart, so that it is conducive to controlling a size of the bent section in the left-right direction, and the structure of the heat exchanger is compact.

As shown in Figs. 4 and 5, the first straight section 3411 extends in the front-rear direction, the first section 31 extends in the front-rear direction, and the length direction of the first straight section 3411 is generally parallel to the length direction of the first section 31. In the plurality of heat exchange tubes 3, the plurality of sections 34 to be bent are translated by a same distance in a direction from right to left.

In some embodiments, a length of the first straight section 3411 before bending is C, and the length of the heat exchange tube 3 is A before the bent section 33 of the heat exchange tube 3 is bent, and C is less than or equal to 0.5 times A.

As shown in Figs. 3 to 5, when the section 34 to be bent in the heat exchange tube 3 is not translated, the heat exchange tube 3 extends straightly in the front-rear direction, and the length of the heat exchange tube 3 is A. After the section 34 to be bent in the heat exchange tube 3 is translated, the length of the first straight section 3411 before bending is C, and C is less than or equal to 0.5 times A. Thus, when the section 34 to be bent is translated, the resistance of the heat exchange tube 3 during displacement can be reduced, thus reducing the stress on the heat exchange tube 3, reducing the influence on a junction between the heat exchange tube 3 and the first header 1 and a junction between the heat exchange tube 3 and the second header 2 respectively, and improving the reliability of the heat exchange tube 3. Also, due to the sufficient gap between the heat exchange tubes at the bent sections, the accumulation of moisture and dust during use is reduced. Further, a top of the bent section brought by the first straight section after bending becomes more flat, which is conducive to the drainage of moisture. In some systems used as an evaporator or a heat pump, water can be prevented or avoided from being blown by the wind, and the service performance can be improved.

In some embodiments, the protruding section 341 includes a first arc-shaped section 3412 at least in part before the bent section 33 is bent, and the plurality of heat exchange tubes 3 have consistent directions from the first faces of their respective first sections 31 to the first faces of their respective first arc-shaped sections 3412. As shown in Figs. 3 and 6, in the plurality of heat exchange tubes 3, the plurality of sections 34 to be bent are translated by the same distance in the direction from right to left, so that the plurality of heat exchange tubes 3 have the consistent directions from the first faces of their respective first sections 31 to the first faces of their respective first arc-shaped sections 3412.

In some other embodiments, as shown in Figs. 3 and 7, a front end of the first arc-shaped section 3412 is connected to the first section 31, and a rear end of the first arc-shaped section 3412 is connected to the second section 32. In the plurality of heat exchange tubes 3, the plurality of sections 34 to be bent are translated by the same distance in the direction from right to left, so that the plurality of heat exchange tubes 3 have the consistent directions from the first faces of their respective first sections 31 to the first faces of their respective first arc-shaped sections 3412.

In some embodiments, the transition section 342 includes a second straight section 3421 at least in part, and a length direction of the second straight section 3421 and the length direction of the first section 31 define an included angle therebetween. Or, the transition section 342 includes a second arc-shaped section 3422 at least in part.

As shown in Figs. 4, 5 and 6, the first section 31 and the second section 32 both extend in the front-rear direction, a front end of one second straight section 3421 is connected to the rear end of the first section 31, and a rear end of the one second straight section 3421 is inclined leftwards in a direction from front to rear. A rear end of another second straight section 3421 is connected to the front end of the second section 32, and a front end of the other second straight section 3421 extends from rear to front and is inclined leftwards.

In some other embodiments, as shown in Figs. 3 and 7, the front end of the first arc-shaped section 3412 is connected to the first section 31 through a second arc-shaped section 3422, and the rear end of the first arc-shaped section 3412 is connected to the second section 32 through another second arc-shaped section 3422.

In some embodiments, the first fin 41 is a corrugated fin extending in the length direction of the first section 31 of the heat exchange tube 3, and/or the second fin 42 is a corrugated fin extending in the length direction of the second section 32 of the heat exchange tube. A density of the first fin 41 is different from a density of the second fin 42.

As shown in Figs. 3 and 4, the first fin 41 includes a plurality of identical sub fins, and the plurality of identical sub fins are sequentially connected end to end to constitute the corrugated first fin 41. The first fin 41 is arranged between the adjacent first sections 31. The first fin 41 is configured to fix the two adjacent first sections 31 in the left-right direction, so as to stabilize the relative position between the adjacent first sections 31 and to improve the heat exchange performance of the heat exchanger.

The second fin 42 includes a plurality of identical sub fins, and the plurality of identical sub fins are sequentially connected end to end to constitute the corrugated second fin 42. The second fin 42 is arranged between the adjacent second sections 32. The second fin 42 is configured to fix the two adjacent second sections 32 in the left-right direction, so as to stabilize the relative position between the adjacent second sections 32 and to improve the heat exchange performance of the heat exchanger.

A density, a number of windows and an angle of the window of the plurality of sub fins in the first fin 41 may be the same with or different from a density, a number of windows and an angle of the window of the plurality of sub fins in the second fin 42. The fin 4 may increase the heat exchange area between adjacent heat exchange tubes 3 and improve the heat exchange efficiency of the heat exchanger.

In some embodiments, the first fin 41 is an insert fin extending in a thickness direction of the first section 31 of the heat exchange tube 3, and/or the second fin 42 is an insert fin extending in a thickness direction of the second section 32 of the heat exchange tube 3.

Some specific exemplary heat exchangers according to the present disclosure are described below with reference to Figs. 1 to 5 and 8.

As shown in Figs. 1 to 5 and 8, the heat exchanger according to the embodiments of the present disclosure includes a first header 1, a second header 2, a plurality of heat exchange tubes 3 and a fin 4.

The first header 1 and the second header 2 are juxtaposed in the front-rear direction and extend in the left-right direction, and a length of the first header 1 is the same with a length of the second header 2.

The plurality of heat exchange tubes 3 are arranged between the first header 1 and the second header 2 and spaced apart in the left-right direction.

The heat exchange tube 3 includes a first section 31, a bent section 33, and a second section 32. A lower end of the first section 31 is connected to a first end of the bent section 33, an upper end of the first section 31 is in communication with the first header 1, a lower end of the second section 32 of the heat exchange tube 3 is connected to a second end of the bent section 33, and an upper end of the second section 32 is in communication with the second header 2. A length direction of the first section 31 and a length direction of the second section 32 define an included angle therebetween, and adjacent bent sections 33 in the left-right direction are spaced apart.

The bent section 33 includes a section 34 to be bent before bending, and the section 34 to be bent includes a protruding section 341 and at least two transition sections 342. A front end of the protruding section 341 is connected to a rear end of one transition section 342, and a front end of the one transition section 342 is connected to a rear end of the first section 31. A rear end of the protruding section 341 is connected to a front end of another transition section 342, and a rear end of the other transition section 342 is connected to a front end of the second section 32.

The heat exchange tube 3 is flat, the heat exchange tube 3 includes a left side face and a right side face arranged in the left-right direction, the heat exchange tube 3 includes a front side face and a rear side face arranged in the front-rear direction, and an intersection portion of the left side face and the front side face is a first side edge. A plane parallel to the page of Fig. 4 is defined as a first plane before the bent section 33 is bent. In the first plane, a projection line of the first side edge of the protruding section 341 of the heat exchange tube 3 is not collinear with a projection line of the first side edge of the first section 31 of the heat exchange tube 3. A minimum distance from the projection line of the first side edge of the protruding section 341 of the heat exchange tube 3 to the projection line of the first side edge of the first section 31 of the heat exchange tube 3 is H, a minimum distance from the projection line of the first side edge of the first section 31 of the heat exchange tube 3 to the projection line of the first side edge of the first section 31 of another adjacent heat exchange tube 3 in the length direction of the first header 1 is L, and H is greater than or equal to L. The protruding section 341 includes a first straight section 3411. The first straight section 3411 extends in the front-rear direction, the first section 31 extends in the front-rear direction, and a length direction of the first straight section 3411 is generally parallel to the length direction of the first section 31.

The transition section 342 includes a second straight section 3421. The first section 31 and the second section 32 both extend in the front-rear direction. A front end of one second straight section 3421 is connected to the rear end of the first section 31, and a rear end of the one second straight section 3421 extends from front to rear and is inclined leftwards. A rear end of another second straight section 3421 is connected to the front end of the second section 32, and a front end of the other second straight section 3421 extends from rear to front and is inclined leftwards.

The fin 4 includes a first fin 41 and a second fin 42.

The first fin 41 includes a plurality of identical sub fins, and the plurality of identical sub fins are sequentially connected end to end to constitute a corrugated first fin 41. The first fin 41 is arranged between adjacent first sections 31, and the first fin 41 is configured to fix the two adjacent first sections 31.

The second fin 42 includes a plurality of identical sub fins, and the plurality of identical sub fins are sequentially connected end to end to constitute a corrugated second fin 42. The second fin 42 is arranged between adjacent second sections 32, and the second fin 42 is configured to fix the two adjacent second sections 32.

Other exemplary heat exchangers according to the present disclosure are described below with reference to Figs. 1 and 6.

As shown in Figs. 1 and 6, the heat exchanger includes the first header 1, the second header 2, the plurality of heat exchange tubes 3 and the fin 4.

The protruding section 341 includes a first arc-shaped section 3412, and the transition section 342 includes two second straight sections 3421.

A front end of the first arc-shaped section 3412 is connected to a rear end of one second straight section 3421, and a front end of the one second straight section 3421 is connected to the rear end of the first section 31. A rear end of the first arc-shaped section 3412 is connected to a front end of another second straight section 3421, and a rear end of the other second straight section 3421 is connected to the front end of the second section 32.

Other structures of the heat exchanger shown in Figs. 1 and 6 may be the same with the structures in the embodiments shown in Figs. 2 to 5 and 8, and will not be described in detail here.

Further exemplary heat exchangers according to the present disclosure are described below with reference to Figs. 1 and 7.

As shown in Figs. 1 and 7, the heat exchanger includes the first header 1, the second header 2, the plurality of heat exchange tubes 3 and the fin 4.

The protruding section 341 includes a first arc-shaped section 3412, and the transition section 342 includes two second arc-shaped sections 3422.

A front end of the first arc-shaped section 3412 is connected to a rear end of one second arc-shaped section 3422, and a front end of the one second arc-shaped section 3422 is connected to the rear end of the first section 31. A rear end of the first arc-shaped section 3412 is connected to a front end of another second arc-shaped section 3422, and a rear end of the other second arc-shaped section 3422 is connected to the front end of the second section 32.

Other structures of the heat exchanger shown in Figs. 1 and 7 may be the same with the structures in the embodiments shown in Figs. 2 to 5 and 8, and will not be described in detail here.

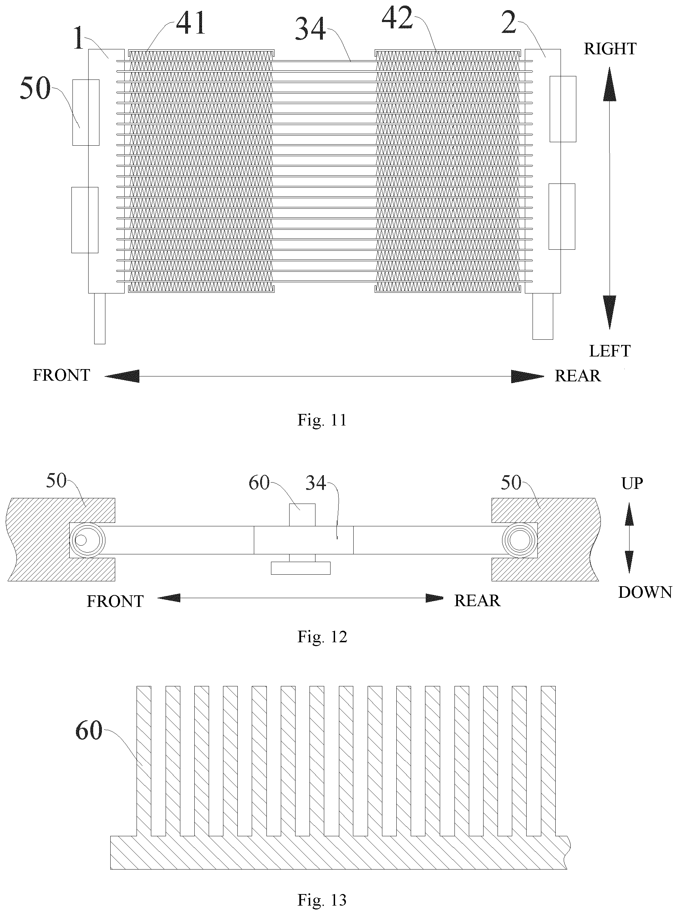

As shown in Figs. 11 to 18, a method for processing a heat exchanger according to an embodiment of the present disclosure includes following steps.

A heat exchanger to be processed is prepared. The heat exchanger to be processed includes a first header 1, a second header 2, a plurality of heat exchange tubes 3 and a fin 4. The plurality of heat exchange tubes 3 are spaced apart along a length direction of the first header 1 (a left-right direction as shown in Fig. 11), and the heat exchange tube 3 communicates the first header 1 with the second header 2. The heat exchange tube 3 includes a first face (a left side face of the heat exchange tube 3 in Fig. 11) and a second face (a right side face of the heat exchange tube 3 in Fig. 11) arranged in parallel in the length direction of the first header 1.

The heat exchange tube 3 includes a first section 31, a section 34 to be bent, and a second section 32. A first end of the first section 31 (a rear end of the first section 31 as shown in Fig. 11) is connected to a first end of the section 34 to be bent (a front end of the section 34 to be bent as shown in Fig. 11), and a second end of the first section 31 (a front end of the first section 31 as shown in Figure 11) is in communication with the first header 1. A first end of the second section 32 (a front end of the second section 32 as shown in Fig. 11) is connected to a second end of the section 34 to be bent (a rear end of the section 34 to be bent as shown in Fig. 11), and a second end of the second section 32 (a rear end of the second section 32 as shown in Fig. 11) is in communication with the second header 2.

The fin 4 includes a first fin 41 and a second fin 42. The first fin 41 is arranged between adjacent first sections 31 in the length direction of the first header 1, the second fin 42 is arranged between adjacent second sections 32 in the length direction of the first header 1, and no fin is arranged between adjacent sections 34 to be bent in the length direction of the first header 1.

A part of the section 34 to be bent of the heat exchange tube 3 is translated by a preset distance relative to the first section 31 and the second section 32 of the heat exchange tube 3 along the length direction of the first header 1, so that the translated part of the section 34 to be bent deviates from the first section 31 of the heat exchange tube 3 in the length direction of the first header 1.

The first header 1 is moved towards the second header 2, and the second header 2 is moved towards the first header 1.

After the part of the section 34 to be bent is translated by the preset distance, the section 34 to be bent of the heat exchange tube 3 is bent in the length direction, while an included angle between the first section 31 and the second section 32 of the heat exchange tube 3 is reduced to a predetermined angle.

As shown in Figs. 11 and 12, the heat exchanger to be processed is prepared, and the first header 1 and the second header 2 may be fixed by a clamping device 50. Specifically, at least two clamping devices 50 are provided, and the at least two clamping devices 50 are arranged on the first header 1 and the second header 2 and fix the heat exchanger to be processed on a workbench, so as to limit the movement of the heat exchanger in the length direction of the first header 1. In some embodiments, the heat exchanger to be processed may not be fixed, or the clamping device may not be used, which is conducive to the movement of the heat exchanger in the subsequent bending process.

In some embodiments, the part of at least one of the plurality of sections 34 to be bent is sequentially translated by the preset distance relative to the first section 31 and the second section 32 along the length direction of the first header 1, or the parts of the plurality of sections 34 to be bent are simultaneously translated by the preset distance relative to the first section 31 and the second section 32 along the length direction of the first header 1. The preset distance is greater than or equal to a spacing between adjacent first sections 31 in the length direction of the first header 1.

In some embodiments, the translation of the plurality of heat exchange tubes may be achieved by using a device. As shown in Figs. 12 to 14, a pushing device 60 is inserted between adjacent sections 34 to be bent in the length direction of the first header 1 after the heat exchanger to be processed is fixed. The pushing device 60 is moved horizontally in the left-right direction, so that the part of the section 34 to be bent is moved horizontally by the preset distance relative to the first section 31 and the second section 32.

When the section 34 to be bent is pushed by the pushing device 60, in order to reduce a pushing force on the section 34 to be bent and prevent the irregular deformation of the section 34 to be bent, the pushing device 60 may sequentially push a single section 34 to be bent step by step, or may sequentially push a plurality of groups of sections 34 to be bent of the plurality of sections 34 to be bent step by step. Each group of sections 34 to be bent includes at least two sections 34 to be bent.

In some specific embodiments, a midpoint of the section 34 to be bent in the length direction is determined, and the midpoint of the section 34 to be bent is horizontally translated leftwards along the left-right direction, so as to obtain a first arc-shaped section 3412, an second straight section 3421 at a front end of the first arc-shaped section 3412, and another second straight section 3421 at a rear end of the first arc-shaped section 3412. Peripheral contours of cross sections of the first arc-shaped section 3412 and the two second straight sections 3421 approximately form a V shape or a U shape.

In some other specific embodiments, near the midpoint of the section 34 to be bent, the midpoint of the section 34 to be bent is horizontally translated leftwards along the left-right direction, so as to obtain a first arc-shaped section 3412, a second arc-shaped section 3422 at a front end of the first arc-shaped section 3412, and another second arc-shaped section 3422 at a rear end of the first arc-shaped section 3412. It can be understood that other portions of the section 34 to be bent may also be translated, so as to obtain the first arc-shaped section 3412 and the second arc-shaped section 3422.

In some embodiments, the section 34 to be bent is twisted relative to the first section 31 and the second section 32 of the heat exchange tube 3 along the length direction of the first header 1 before the section 34 to be bent of the heat exchange tube 3 is bent, so that an included angle between a first face of the section 34 to be bent of the heat exchange tube 3 and a first face of the first section 31 of the heat exchange tube 3 is greater than 0 degrees and less than or equal to 90 degrees.

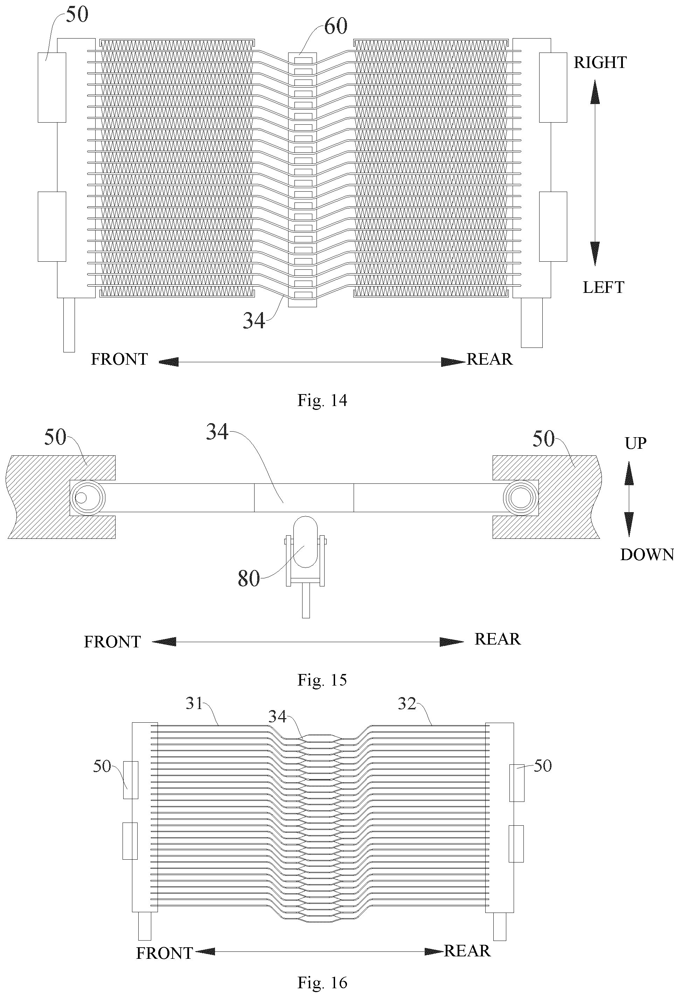

As shown in Figs. 15 and 16, the part of the section 34 to be bent is twisted after the part of the section 34 to be bent is moved horizontally by the preset distance.

A torsion position of the section 34 to be bent is determined, a torsion member 80 is placed below the torsion position and adjacent to lower surfaces of the plurality of sections 34 to be bent. Then, the torsion member 80 sequentially comes into contact with partial surfaces of the plurality of sections 34 to be bent along the length direction of the first header 1 (the left-right direction as shown in Fig. 11), so as to twist the section 34 to be bent by a certain angle, so that the section 34 to be bent of the heat exchange tube 3 is inclined relative to the first section 31 and the second section 32, and thus the included angle between the first face of the section 34 to be bent of the heat exchange tube 3 and the first face of the first section 31 of the heat exchange tube 3 is greater than 0 degrees and less than or equal to 90 degrees.

In some embodiments, a mandrel 70 is placed on the section 34 to be bent and abuts against the part of the section 34 to be bent when the section 34 to be bent of the heat exchange tube 3 is bent. It can be understood that the mandrel allows the deformation of the heat exchange tube at the section to be bent to be controlled, but the bending may be realized without the mandrel 70.

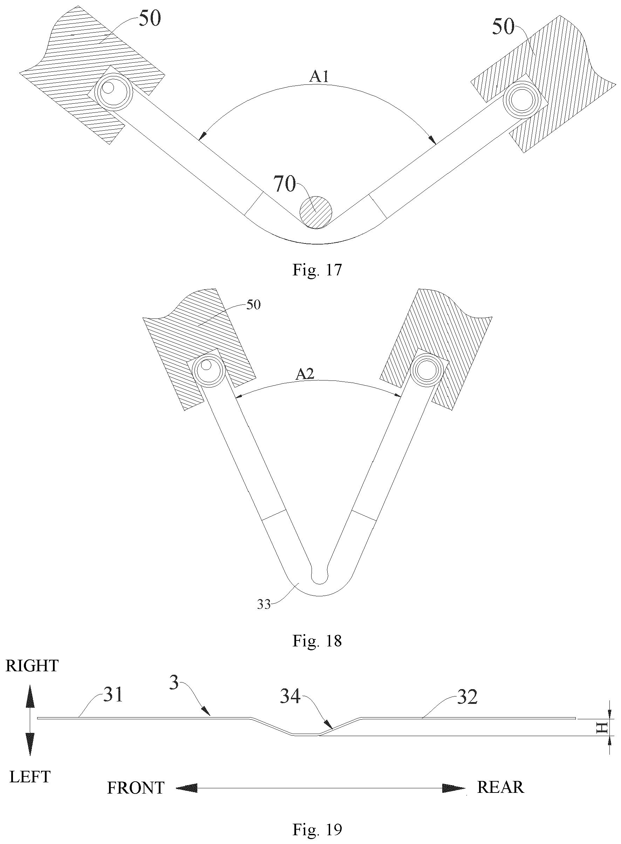

As shown in Fig. 17, the torsion position of the section 34 to be bent is located, and the mandrel 70 is placed above the torsion position and abuts against upper surfaces of the plurality of sections 34 to be bent. The first header 1 and the second header 2 on two sides are moved upward simultaneously, so as to reduce the included angle between the first section 31 and the second section 32, so that the part of the section 34 to be bent moves close to a peripheral surface of the mandrel 70.

In some embodiments, when the section 34 to be bent of the heat exchange tube is bent, the mandrel is placed on the section 34 to be bent, the heat exchange tube at the section 34 to be bent is not twisted, and the mandrel 70 abuts against a surface of the part of the section 34 to be bent in its width direction. The first header 1 and the second header 2 on two sides are moved upward simultaneously, so as to reduce the included angle between the first section 31 and the second section 32, so that the part of the section 34 to be bent moves close to the circumferential surface of the mandrel 70.

In some embodiments, the step of bending the section 34 to be bent of the heat exchange tube 3 includes following sub steps: the section 34 to be bent of the heat exchange tube 3 is bent, so as to bend the angle between the length direction of the first section 31 and the length direction of the second section 32 to a preset angle A1; the mandrel 70 is pulled out and the section 34 to be bent of the heat exchange tube 3 continues to be bent, so as to bend the angle between the length direction of the first section 31 and the length direction of the second section 32 to a target angle A2, in which A2≥0°, and A2 is less than A1.

In some other embodiments, the heat exchange tube at the section 34 to be bent may be pushed to be inclined leftwards as a whole or partially after the mandrel is pulled out, and then the section 34 to be bent of the heat exchange tube 3 continues to be further bent, so as to bend the angle between the length direction of the first section 31 and the length direction of the second section 32 to the target angle A2, in which A2≥0°, and A2 is less than A1.

As shown in Fig. 17, the clamping devices 50 are moved upward synchronously, so as to bend the section 34 to be bent of the heat exchange tube 3, so that the first section 31 and the second section 32 move close to each other, and the included angle between the length direction of the first section 31 and the length direction of the second section 32 is A1. Specifically, a range of A1 may be: 60°≤A1≤135°.

As shown in Fig. 18, the mandrel 70 is first pulled out, and then the clamping devices 50 continue to be moved upward, so as to further bend the section 34 to be bent of the heat exchange tube 3, so that the first section 31 and the second section 32 move further close to each other, and the included angle between the length direction of the first section 31 and the length direction of the second section 32 is A2. Specifically, A2≥0°, and A2 is less than A1.

As shown in Figs. 19 to 24, a method for processing a heat exchanger according to another embodiment of the present disclosure includes following steps.

A section of a heat exchange tube 3 is translated by a preset distance along a thickness direction of the heat exchange tube 3 (a left-right direction as shown in Fig. 19) relative to a first end (a front end of the heat exchange tube 3 in Fig. 19) and a second end (a rear end of the heat exchange tube 3 in Fig. 19) of the heat exchange tube 3, so that the translated sections of the heat exchange tube 3 protrudes beyond the first end and the second end of the heat exchange tube 3 in the thickness direction of the heat exchange tube 3. As shown in Fig. 19, a middle section of the heat exchange tube 3 is translated from right to left by a distance of H.

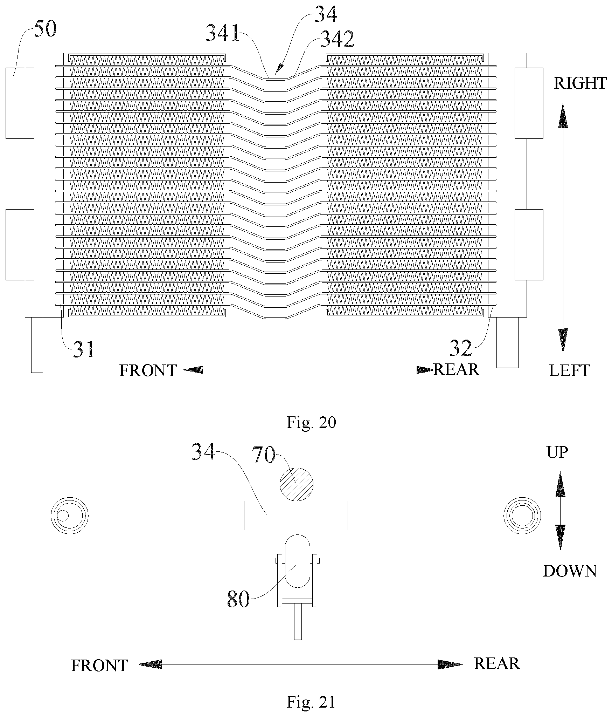

The plurality of heat exchange tubes 3 are arranged and spaced apart along the thickness direction of the heat exchange tube 3, and its two ends in the length direction are mounted to and fitted with the first header 1 and the second header 2, respectively, and directions, in which the sections of the plurality of heat exchange tubes 3 protrude from their first ends and second ends in the thickness direction of the heat exchange tube 3, are identical. The first ends of the plurality of heat exchange tubes 3 (the front ends of the heat exchange tubes 3 in Fig. 20) are fixedly connected to a first header 1, and the second ends of the plurality of heat exchange tubes 3 (the rear ends of the heat exchange tubes 3 in Fig. 20) are fixedly connected to a second header 2. The protruding sections of the plurality of heat exchange tubes 3 are aligned in a length direction of the first header 1 (i.e. in the thickness direction of the heat exchange tube 3).

As shown in Fig. 20, the plurality of heat exchange tubes 3 shown in Fig. 19 are spaced apart and arranged between the first header 1 and the second header 2, and each of the protruding sections of the plurality of heat exchange tubes 3 protrudes from right to left. In some embodiments, the plurality of heat exchange tubes 3 have a consistent spacing therebetween.

In the thickness direction of the heat exchange tube 3, a first fin 41 and a second fin 42 are arranged between adjacent heat exchange tubes 3, and no fin is arranged between the protruding sections of the adjacent heat exchange tubes 3.

A section of the heat exchange tube 3 connected to the first fin 41 is a first section 31, a section of the heat exchange tube 3 connected to the second fin 42 is a second section 32, and a section of the heat exchange tube 3, which is not connected to the first fin 41 and the second fin 42, is a section 34 to be bent.

In some embodiments, the method for processing the heat exchanger further includes following steps: the heat exchange tube 3 is fixedly connected with the first header 1; the heat exchange tube 3 is fixedly connected with the second header 2; the heat exchange tube 3 is fixedly connected with the first fin 41; the heat exchange tube 3 is fixedly connected with the second fin 42.

As shown in Fig. 19, the plurality of heat exchange tubes 3 extend in the left-right direction, the left end of the heat exchange tube 3 is fixedly connected to the first header 1, the right end of the heat exchange tube 3 is fixedly connected to the second header 2, and the plurality of heat exchange tubes 3 are uniformly arranged along the left-right direction. The first fin 41 is arranged between the first sections 31 of the adjacent heat exchange tubes 3, and the second fin 42 is arranged between the second sections 32 of the adjacent heat exchange tubes 3.

In some embodiments, the method for processing the heat exchanger further includes following steps: the section 34 to be bent of the heat exchange tube 3 is bent in the length direction, while the included angle between the first section 31 and the second section 32 of the heat exchange tube is reduced to a predetermined angle.

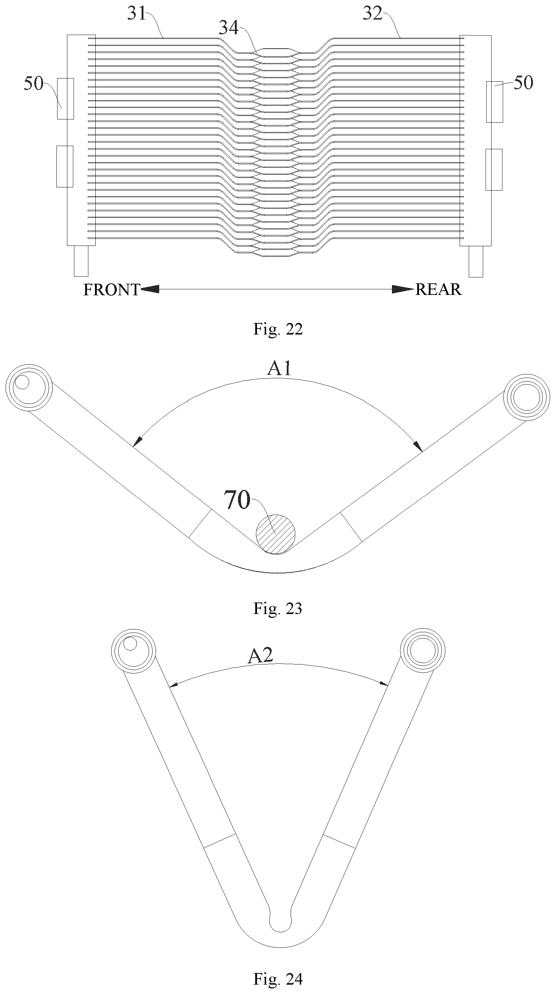

As shown in Figs. 23 and 24, the first header 1 and the second header 2 are moved upward so that the section 34 to be bent is bent, while the included angle between the first section 31 and the second section 32 of the heat exchange tube is reduced to the predetermined angle.

In some embodiments, the heat exchange tube 3 includes a first face (a left side face of the heat exchange tube 3 in Fig. 20) and a second face (a right side face of the heat exchange tube 3 in Fig. 20) arranged in parallel in the length direction of the first header 1. Before the section 34 to be bent of the heat exchange tube 3 is bent, the protruding section is twisted relative to the first section 31 and the second section 32 of the heat exchange tube 3 along the length direction of the first header 1, so that an included angle between a first face of the protruding section and a first face of the first section 31 is greater than 0 degrees and less than or equal to 90 degrees.

As shown in Figs. 21 and 22, the part of the section 34 to be bent is twisted after the part of the section 34 to be bent is moved horizontally by the preset distance. Specifically, a torsion position of the section 34 to be bent is determined, a torsion member 80 is placed below the center of the torsion position and abuts against lower surfaces of the plurality of sections 34 to be bent. Then, the torsion member 80 is rolled over the plurality of sections 34 to be bent along the length direction of the first header 1 (the left-right direction as shown in Fig. 20), so as to twist the sections 34 to be bent to a certain angle, so that the section 34 to be bent of the heat exchange tube 3 is inclined relative to the first section 31 and the second section 32, and thus the included angle between a first face of the section 34 to be bent of the heat exchange tube 3 and the first face of the first section 31 of the heat exchange tube 3 is greater than 0 degrees and less than or equal to 90 degrees.

In some embodiments, the mandrel 70 is placed on the protruding section and abuts against the protruding section when the protruding section of the heat exchange tube 3 is bent. The protruding section of the heat exchange tube 3 is bent, so as to bend an angle between the length direction of the first section 31 and the length direction of the second section 32 to a preset angle A1. The mandrel 70 is pulled out. The protruding section of the heat exchange tube 3 continues to be bent, so as to bend the angle between the length direction of the first section 31 and the length direction of the second section 32 to a target angle A2, in which A2≥0°, and A2 is less than A1.

As shown in Fig. 23, the torsion position of the section 34 to be bent is determined, and the mandrel 70 is placed above the torsion position and abuts against upper surfaces of the plurality of sections 34 to be bent. The first header 1 and the second header 2 on two sides of the section 34 to be bent are moved upward simultaneously, so that the part of the section 34 to be bent moves close to a peripheral surface of the mandrel 70.

As shown in Fig. 23, the first header 1 and the second header 2 are synchronously moved upward, so as to bend the section 34 to be bent of the heat exchange tube 3, so that the first section 31 and the second section 32 move close to each other, and the included angle between the length direction of the first section 31 and the length direction of the second section 32 is A1. Specifically, a range of A1 may be: 60°≤A1≤135°.

As shown in Fig. 24, the mandrel 70 is first pulled out, and then the first header 1 and the second header 2 continue to be moved upward, so as to further bend the section 34 to be bent of the heat exchange tube 3, so that the first section 31 and the second section 32 come further close to each other, and the included angle between the length direction of the first section 31 and the length direction of the second section 32 is A2. Specifically, A2≥0°, and A2 is less than A1.

In some embodiments, when the section 34 to be bent is bent, it is not necessary to simultaneously move the first header 1 and the second header 2, regardless of whether the first section 31 and the second section 32 are bent to the angle of A1 or A2. The first header 1 and the first section 31 may be fixed, and the second header 2 and the second section 32 may come close to the first header 1 and the first section 31 by being moved upward, so as to realize the predetermined angle between the first section 31 and the second section 32.

It should be noted that the above steps of the method may be performed in different sequences, that is, the sequence of the above steps of the method is not limited in the present disclosure. For example, the heat exchange tube 3 may be assembled with the first header 1, the second header 2 and the fins 41, 42, after the corresponding section of the heat exchange tube 3 is translated, twisted and bent.

In the description of the present disclosure, terms such as "an embodiment," "some embodiments," "an example," "a specific example," or "some examples," means that a particular feature, structure, material, or characteristic described in connection with the embodiment or example is included in at least one embodiment or example of the present disclosure. Thus, the appearances of these terms in various places throughout this specification are not necessarily referring to the same embodiment or example of the present disclosure. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

In the description of the present disclosure, terms "first" and "second" are only used for descriptive purposes and cannot be understood as indicating or implying relative importance. In the description of the present disclosure, "a plurality of" means at least two such as two or three, unless otherwise expressly and specifically defined.

In the present disclosure, unless otherwise expressly defined, terms such as "mounting," "interconnection," "connection," "fixing" shall be understood broadly, and may be, for example, fixed connections, detachable connections, or integral connections; may also be mechanical or electrical connections or intercommunication; may also be direct connections or indirect connections via intervening media; may also be inner communications or interactions of two elements. For those skilled in the art, the specific meaning of the above terms in the present disclosure can be understood according to the specific situations.

In the present disclosure, unless otherwise expressly defined and specified, a structure in which a first feature is "on" or "below" a second feature may include an embodiment in which the first feature is in direct contact with the second feature, or may further include an embodiment in which the first feature and the second feature are in indirect contact through intermediate media. Furthermore, a first feature "on," "above," or "on top of" a second feature may include an embodiment in which the first feature is right or obliquely "on," "above," or "on top of" the second feature, or just means that the first feature is at a height higher than that of the second feature, while a first feature "below," "under," or "on bottom of" a second feature may include an embodiment in which the first feature is right or obliquely "below," "under," or "on bottom of" the second feature, or just means that the first feature is at a height lower than that of the second feature.

Although the embodiments of the present disclosure have been shown and described above, it can be understood that the above embodiments are exemplary and shall not be understood as limitation to the present disclosure, and changes, modifications, alternatives and variations can be made in the above embodiments within the scope of the present disclosure by those skilled in the art.

## Claims

1. A heat exchanger, comprising:
a first header (1) and a second header (2);
a plurality of heat exchange tubes (3) spaced apart along a length direction of the first header (1), the heat exchange tube (3) communicating the first header (1) with the second header, the heat exchange tube (3) being flat, the heat exchange tube (3) comprising a first face and a second face arranged along a thickness direction of the heat exchange tube (3), the heat exchange tube (3) comprising a third face and a fourth face arranged along a width direction of the heat exchange tube (3), an intersection portion of the first face and the third face being a first side edge, the heat exchange tube (3) comprising a first section (31), a bent section (33) and a second section (32), a first end of the first section (31) of the heat exchange tube (3) being connected to a first end of the bent section (33), a second end of the first section (31) being in communication with the first header (1), a first end of the second section (32) of the heat exchange tube (3) being connected to a second end of the bent section (33), a second end of the second section (32) being in communication with the second header (2), a length direction of the first section (31) and a length direction of the second section (32) define an included angle therebetween, and adjacent bent sections (33) in a thickness direction of the bent section (33) being spaced apart; and
a fin (4) comprising a first fin (41) and a second fin (42), the first fin (41) being arranged between adjacent first sections (31) in the length direction of the first header (1), the second fin (42) being arranged between adjacent second sections (32) in the length direction of the first header (1), and no fin being arranged between adjacent bent sections (33) in the length direction of the first header (1),
the heat exchanger being **characterized in that** the bent section (33) of the heat exchanger comprises a section (34) to be bent before bending, the section (34) to be bent comprises a protruding section (341) and at least two transition sections (342), a first end of the protruding section (341) is connected to a first end of one transition section (342), a second end of the one transition section (342) is connected to the first end of the first section (31), a second end of the protruding section (341) is connected to a first end of another transition section (342), and a second end of the other transition section (342) is connected to the first end of the second section (32),
wherein a plane parallel to the length direction of the first header (1) and parallel to the length direction of the first section (31), and also perpendicular to a width direction of the first section (31) is defined as a first plane before the bent section (33) is bent; in the first plane, a projection line of a first side edge of the protruding section (341) of the heat exchange tube (3) is not collinear with a projection line of a first side edge of the first section (31) of the heat exchange tube (3), a minimum distance from the projection line of the first side edge of the protruding section (341) of the heat exchange tube (3) to the projection line of the first side edge of the first section (31) of the heat exchange tube (3) is H, and a minimum distance from the projection line of the first side edge of the first section (31) of the heat exchange tube (3) to the projection line of the first side edge of the first section (31) of another adjacent heat exchange tube (3) in the length direction of the first header (1) is L, and H is greater than or equal to L.

2. The heat exchanger according to claim 1, wherein H is less than 5 times Tw, in which Tw is a width of the heat exchange tube (3).

3. The heat exchanger according to claim 1 or 2, wherein H is greater than or equal to 1.5 times L.

4. The heat exchanger according to any one of claims 1 to 3, wherein the protruding section (341) comprises a first straight section (3411) at least in part before the bent section (33) of the heat exchanger is bent, a length direction of the first straight section (3411) is generally parallel to the length direction of the first section (31), and the plurality of heat exchange tubes (3) have consistent directions from first faces of their respective first sections (31) to first faces of their respective first straight sections (3411).

5. The heat exchanger according to claim 4, wherein the first straight section (3411) has a length of C before bending, the heat exchange tube (3) has a length of A before the bent section (33) of the heat exchange tube (3) is bent, and C is less than or equal to 0.5 times A.

6. The heat exchanger according to any one of claims 1 to 3, wherein, before the bent section (33) of the heat exchanger is bent, the protruding section (341) comprises a first arc-shaped section (3412) at least in part, and the plurality of heat exchange tubes (3) have consistent directions from first faces of their respective first sections (31) to first faces of their respective first arc-shaped sections (3412).

7. The heat exchanger according to claim 4 or 5, wherein the transition section (342) comprises a second straight section (3421) at least in part, and a length direction of the second straight section (3421) and the length direction of the first section (31) define an included angle therebetween, or the transition section (342) comprises a second arc-shaped section (3422) at least in part.

8. The heat exchanger according to any one of claims 1 to 3, wherein the first fin (41) is a corrugated fin extending in the length direction of the first section (31) of the heat exchange tube (3), and/or the second fin (42) is a corrugated fin extending in the length direction of the second section (32) of the heat exchange tube (3), and a density of the first fin (41) is different from a density of the second fin (42).

9. The heat exchanger according to any one of claims 1 to 3, wherein the first fin (41) is an insert fin extending in a thickness direction of the first section (31) of the heat exchange tube (3), and/or the second fin (42) is an insert fin extending in a thickness direction of the second section (32) of the heat exchange tube (3).

10. A method for processing a heat exchanger according to any one of claims 1 to 9, comprising:
preparing a heat exchanger to be processed, wherein the heat exchanger to be processed comprises a first header, a second header, a plurality of heat exchange tubes and a fin, the plurality of the heat exchange tubes are spaced apart along a length direction of the first header, the heat exchange tube communicates the first header with the second header, the heat exchange tube comprises a first face and a second face arranged in parallel in the length direction of the first header, the heat exchange tube comprises a first section, a section to be bent and a second section, a first end of the first section is connected to a first end of the section to be bent, a second end of the first section is in communication with the first header, a first end of the second section is connected to a second end of the section to be bent, a second end of the second section is in communication with the second header, the fin comprises a first fin and a second fin, the first fin is arranged between adjacent first sections in the length direction of the first header, the second fin is arranged between adjacent second sections in the length direction of the first header, and no fin is arranged between adjacent sections to be bent in the length direction of the first header;
translating a part of the section to be bent of the heat exchange tube by a preset distance relative to the first section and the second section of the heat exchange tube along the length direction of the first header, so that the translated part of the section to be bent deviates from the first section of the heat exchange tube in the length direction of the first header;
moving the first header towards the second header, and moving the second header towards the first header; and
bending the section to be bent of the heat exchange tube in the length direction while reducing an included angle between the first section and the second section of the heat exchange tube to a predetermined angle, after translating the part of the section to be bent by the preset distance.

11. The method for processing the heat exchanger according to claim 10, wherein the part of at least one of a plurality of sections to be bent is sequentially translated by the preset distance relative to the first section and the second section along the length direction of the first header, or the parts of a plurality of sections to be bent are simultaneously translated by the preset distance relative to the first section and the second section along the length direction of the first header, and the preset distance is greater than or equal to a spacing between adjacent first sections in the length direction of the first header.

12. The method for processing the heat exchanger according to claim 10, wherein before the section to be bent of the heat exchange tube is bent,
the section to be bent is twisted relative to the first section and the second section of the heat exchange tube along the length direction of the first header, so that a included angle between a first face of the section to be bent of the heat exchange tube and a first face of the first section of the heat exchange tube is greater than 0 degrees and less than or equal to 90 degrees.

13. The method for processing the heat exchanger according to any one of claims 10 to 12, wherein a mandrel is placed on the section to be bent and abuts against the part of the section to be bent, when the section to be bent of the heat exchange tube is bent.

14. The method for processing the heat exchanger according to claim 13, wherein bending the section to be bent of the heat exchange tube comprises:
bending the section to be bent of the heat exchange tube, so as to bend an angle between a length direction of the first section and a length direction of the second section to a preset angle A1;
pulling out the mandrel; and
continuing to bend the section to be bent of the heat exchange tube, so as to bend the angle between the length direction of the first section and the length direction of the second section to a target angle A2, wherein A2≥0°, and A2 is less than A1.

## Patentansprüche

1. Ein Wärmetauscher, der folgende Merkmale aufweist:
ein erstes Sammelrohr (1) und ein zweites Sammelrohr (2);
eine Mehrzahl von Wärmeaustauschrohren (3), die entlang einer Längsrichtung des ersten Sammelrohrs (1) beabstandet sind, wobei das Wärmeaustauschrohr (3) das erste Sammelrohr (1) mit dem zweiten Sammelrohr verbindet, das Wärmeaustauschrohr (3) flach ist, das Wärmeaustauschrohr (3) eine erste Fläche und eine zweite Fläche aufweist, die entlang einer Dickenrichtung des Wärmeaustauschrohrs (3) angeordnet sind, das Wärmeaustauschrohr (3) eine dritte Fläche und eine vierte Fläche aufweist, die entlang einer Breitenrichtung des Wärmeaustauschrohrs (3) angeordnet sind, ein Schnittabschnitt der ersten Fläche und der dritten Fläche eine erste Seitenkante ist, das Wärmeaustauschrohr (3) einen ersten Abschnitt (31), einen gebogenen Abschnitt (33) und einen zweiten Abschnitt (32) aufweist, ein erstes Ende des ersten Abschnitts (31) des Wärmeaustauschrohrs (3) mit einem ersten Ende des gebogenen Abschnitts (33) verbunden ist, ein zweites Ende des ersten Abschnitts (31) mit dem ersten Sammelrohr (1) in Verbindung steht, ein erstes Ende des zweiten Abschnitts (32) des Wärmeaustauschrohrs (3) mit einem zweiten Ende des gebogenen Abschnitts (33) verbunden ist, ein zweites Ende des zweiten Abschnitts (32) mit dem zweiten Sammelrohr (2) in Verbindung steht, eine Längsrichtung des ersten Abschnitts (31) und eine Längsrichtung des zweiten Abschnitts (32) einen eingeschlossenen Winkel dazwischen definieren, und benachbarte gebogene Abschnitte (33) in einer Dickenrichtung des gebogenen Abschnitts (33) beabstandet sind; und
eine Rippe (4), die eine erste Rippe (41) und eine zweite Rippe (42) aufweist, wobei die erste Rippe (41) zwischen benachbarten ersten Abschnitten (31) in der Längsrichtung des ersten Sammelrohrs (1) angeordnet ist, die zweite Rippe (42) zwischen benachbarten zweiten Abschnitten (32) in der Längsrichtung des ersten Sammelrohrs (1) angeordnet ist, und zwischen benachbarten gebogenen Abschnitten (33) in der Längsrichtung des ersten Sammelrohrs (1) keine Rippe angeordnet ist,
wobei der Wärmetauscher **dadurch gekennzeichnet ist, dass**
der gebogene Abschnitt (33) des Wärmetauschers einen Abschnitt (34) aufweist, der vor dem Biegen gebogen werden soll, der zu biegende Abschnitt (34) einen vorstehenden Abschnitt (341) und zumindest zwei Übergangsabschnitte (342) aufweist, ein erstes Ende des vorstehenden Abschnitts (341) mit einem ersten Ende eines Übergangsabschnitts (342) verbunden ist, ein zweites Ende des einen Übergangsabschnitts (342) mit dem ersten Ende des ersten Abschnitts (31) verbunden ist, ein zweites Ende des vorstehenden Abschnitts (341) mit einem ersten Ende eines anderen Übergangsabschnitts (342) verbunden ist, und ein zweites Ende des anderen Übergangsabschnitts (342) mit dem ersten Ende des zweiten Abschnitts (32) verbunden ist,
wobei eine Ebene parallel zu der Längsrichtung des ersten Sammelrohrs (1) und parallel zu der Längsrichtung des ersten Abschnitts (31) und auch senkrecht zu einer Breitenrichtung des ersten Abschnitts (31) als eine erste Ebene definiert ist, bevor der gebogene Abschnitt (33) gebogen wird; in der ersten Ebene eine Projektionslinie einer ersten Seitenkante des vorstehenden Abschnitts (341) des Wärmeaustauschrohrs (3) nicht kollinear mit einer Projektionslinie einer ersten Seitenkante des ersten Abschnitts (31) des Wärmeaustauschrohrs (3) ist, ein minimaler Abstand von der Projektionslinie der ersten Seitenkante des vorstehenden Abschnitts (341) des Wärmeaustauschrohrs (3) zu der Projektionslinie der ersten Seitenkante des ersten Abschnitts (31) des Wärmeaustauschrohrs (3) H ist, und ein minimaler Abstand von der Projektionslinie der ersten Seitenkante des ersten Abschnitts (31) des Wärmeaustauschrohrs (3) zu der Projektionslinie der ersten Seitenkante des ersten Abschnitts (31) eines anderen benachbarten Wärmeaustauschrohrs (3) in der Längsrichtung des ersten Sammelrohrs (1) L ist, und H größer oder gleich L ist.

2. Der Wärmetauscher gemäß Anspruch 1, wobei H kleiner als das 5-fache von Tw ist, wobei Tw eine Breite des Wärmeaustauschrohrs (3) ist.

3. Der Wärmetauscher gemäß Anspruch 1 oder 2, wobei H größer oder gleich dem 1,5-fachen von L ist.

4. Der Wärmetauscher gemäß einem der Ansprüche 1 bis 3, wobei der vorstehende Abschnitt (341) einen ersten geraden Abschnitt (3411) zumindest teilweise aufweist, bevor der gebogene Abschnitt (33) des Wärmetauschers gebogen wird, eine Längsrichtung des ersten geraden Abschnitts (3411) im Allgemeinen parallel zu der Längsrichtung des ersten Abschnitts (31) ist, und die Mehrzahl von Wärmeaustauschrohren (3) konsistente Richtungen von ersten Flächen ihrer jeweiligen ersten Abschnitte (31) zu ersten Flächen ihrer jeweiligen ersten geraden Abschnitte (3411) aufweisen.

5. Der Wärmetauscher gemäß Anspruch 4, wobei der erste gerade Abschnitt (3411) eine Länge von C vor dem Biegen aufweist, das Wärmeaustauschrohr (3) eine Länge von A aufweist, bevor der gebogene Abschnitt (33) des Wärmeaustauschrohrs (3) gebogen wird, und C kleiner oder gleich dem 0,5-fachen von A ist.

6. Der Wärmetauscher gemäß einem der Ansprüche 1 bis 3, wobei, bevor der gebogene Abschnitt (33) des Wärmetauschers gebogen wird, der vorstehende Abschnitt (341) einen ersten bogenförmigen Abschnitt (3412) zumindest teilweise aufweist, und die Mehrzahl von Wärmeaustauschrohren (3) konsistente Richtungen von ersten Flächen ihrer jeweiligen ersten Abschnitte (31) zu ersten Flächen ihrer jeweiligen ersten bogenförmigen Abschnitte (3412) aufweisen.

7. Der Wärmetauscher gemäß Anspruch 4 oder 5, wobei der Übergangsabschnitt (342) einen zweiten geraden Abschnitt (3421) zumindest teilweise aufweist, und eine Längsrichtung des zweiten geraden Abschnitts (3421) und die Längsrichtung des ersten Abschnitts (31) einen eingeschlossenen Winkel zwischen sich definieren, oder der Übergangsabschnitt (342) einen zweiten bogenförmigen Abschnitt (3422) zumindest teilweise aufweist.

8. Der Wärmetauscher gemäß einem der Ansprüche 1 bis 3, wobei die erste Rippe (41) eine gewellte Rippe ist, die sich in der Längsrichtung des ersten Abschnitts (31) des Wärmeaustauschrohrs (3) erstreckt, und/oder die zweite Rippe (42) eine gewellte Rippe ist, die sich in der Längsrichtung des zweiten Abschnitts (32) des Wärmeaustauschrohrs (3) erstreckt, und sich eine Dichte der ersten Rippe (41) von einer Dichte der zweiten Rippe (42) unterscheidet.

9. Der Wärmetauscher gemäß einem der Ansprüche 1 bis 3, wobei die erste Rippe (41) eine Einsatzrippe ist, die sich in einer Dickenrichtung des ersten Abschnitts (31) des Wärmeaustauschrohrs (3) erstreckt, und/oder die zweite Rippe (42) eine Einsatzrippe ist, die sich in einer Dickenrichtung des zweiten Abschnitts (32) des Wärmeaustauschrohrs (3) erstreckt.

10. Ein Verfahren zum Verarbeiten eines Wärmetauschers gemäß einem der Ansprüche 1 bis 9, das folgende Schritte aufweist:
Vorbereiten eines zu verarbeitenden Wärmetauschers, wobei der zu verarbeitende Wärmetauscher ein erstes Sammelrohr, ein zweites Sammelrohr, eine Mehrzahl von Wärmeaustauschrohren und eine Rippe aufweist, die Mehrzahl von Wärmeaustauschrohren entlang einer Längsrichtung des ersten Sammelrohrs beabstandet sind, das Wärmeaustauschrohr das erste Sammelrohr mit dem zweiten Sammelrohr verbindet, das Wärmeaustauschrohr eine erste Fläche und eine zweite Fläche aufweist, die parallel in der Längsrichtung des ersten Sammelrohrs angeordnet sind, das Wärmeaustauschrohr einen ersten Abschnitt, einen zu biegenden Abschnitt und einen zweiten Abschnitt aufweist, ein erstes Ende des ersten Abschnitts mit einem ersten Ende des zu biegenden Abschnitts verbunden ist, ein zweites Ende des ersten Abschnitts mit dem ersten Sammelrohr in Verbindung steht, ein erstes Ende des zweiten Abschnitts mit einem zweiten Ende des zu biegenden Abschnitts verbunden ist, ein zweites Ende des zweiten Abschnitts mit dem zweiten Sammelrohr in Verbindung steht, die Rippe eine erste Rippe und eine zweite Rippe aufweist, die erste Rippe zwischen benachbarten ersten Abschnitten in der Längsrichtung des ersten Sammelrohrs angeordnet ist, die zweite Rippe zwischen benachbarten zweiten Abschnitten in der Längsrichtung des ersten Sammelrohrs angeordnet ist, und zwischen benachbarten zu biegenden Abschnitten in der Längsrichtung des ersten Sammelrohrs keine Rippe angeordnet ist;
Verschieben eines Teils des zu biegenden Abschnitts des Wärmeaustauschrohrs um einen voreingestellten Abstand relativ zu dem ersten Abschnitt und dem zweiten Abschnitt des Wärmeaustauschrohrs entlang der Längsrichtung des ersten Sammelrohrs, so dass der verschobene Teil des zu biegenden Abschnitts von dem ersten Abschnitt des Wärmeaustauschrohrs in der Längsrichtung des ersten Sammelrohrs abweicht;
Bewegen des ersten Sammelrohrs in Richtung des zweiten Sammelrohrs und Bewegen des zweiten Sammelrohrs in Richtung des ersten Sammelrohrs; und
Biegen des zu biegenden Abschnitts des Wärmeaustauschrohrs in der Längsrichtung, während ein eingeschlossener Winkel zwischen dem ersten Abschnitt und dem zweiten Abschnitt des Wärmeaustauschrohrs auf einen vorbestimmten Winkel reduziert wird, nach dem Verschieben des Teils des zu biegenden Abschnitts um den voreingestellten Abstand.

11. Das Verfahren zum Verarbeiten des Wärmetauschers gemäß Anspruch 10, wobei der Teil von zumindest einem von einer Mehrzahl von zu biegenden Abschnitten sequentiell um den voreingestellten Abstand relativ zu dem ersten Abschnitt und dem zweiten Abschnitt entlang der Längsrichtung des ersten Sammelrohrs verschoben wird, oder die Teile einer Mehrzahl von zu biegenden Abschnitten gleichzeitig um den voreingestellten Abstand relativ zu dem ersten Abschnitt und dem zweiten Abschnitt entlang der Längsrichtung des ersten Sammelrohrs verschoben werden, und der voreingestellte Abstand größer oder gleich einem Abstand zwischen benachbarten ersten Abschnitten in der Längsrichtung des ersten Sammelrohrs ist.

12. Das Verfahren zum Verarbeiten des Wärmetauschers gemäß Anspruch 10, wobei, bevor der zu biegende Abschnitt des Wärmeaustauschrohrs gebogen wird,
der zu biegende Abschnitt relativ zu dem ersten Abschnitt und dem zweiten Abschnitt des Wärmeaustauschrohrs entlang der Längsrichtung des ersten Sammelrohrs verdreht wird, so dass ein eingeschlossener Winkel zwischen einer ersten Fläche des zu biegenden Abschnitts des Wärmeaustauschrohrs und einer ersten Fläche des ersten Abschnitts des Wärmeaustauschrohrs größer als 0 Grad und kleiner oder gleich 90 Grad ist.

13. Das Verfahren zum Verarbeiten des Wärmetauschers gemäß einem der Ansprüche 10 bis 12, wobei ein Dorn auf dem zu biegenden Abschnitt platziert ist und an dem Teil des zu biegenden Abschnitts anliegt, wenn der zu biegende Abschnitt des Wärmeaustauschrohrs gebogen wird.

14. Das Verfahren zum Verarbeiten des Wärmetauschers gemäß Anspruch 13, wobei das Biegen des zu biegenden Abschnitts des Wärmeaustauschrohrs folgende Schritte aufweist:
Biegen des zu biegenden Abschnitts des Wärmeaustauschrohrs, um einen Winkel zwischen einer Längsrichtung des ersten Abschnitts und einer Längsrichtung des zweiten Abschnitts auf einen voreingestellten Winkel A1 zu biegen;
Herausziehen des Dorns; und
Fortsetzen des Biegens des zu biegenden Abschnitts des Wärmeaustauschrohrs, um den Winkel zwischen der Längsrichtung des ersten Abschnitts und der Längsrichtung des zweiten Abschnitts auf einen Zielwinkel A2 zu biegen, wobei A2 ≥ 0° und A2 kleiner als A1 ist.

## Revendications

1. Échangeur de chaleur, comprenant :
un premier collecteur (1) et un deuxième collecteur (2) ;
une pluralité de tubes d'échange de chaleur (3) espacés le long d'une direction de longueur du premier collecteur (1), le tube d'échange de chaleur (3) faisant communiquer le premier collecteur (1) avec le deuxième collecteur, le tube d'échange de chaleur (3) étant plat, le tube d'échange de chaleur (3) comprenant une première face et une deuxième face agencées le long d'une direction d'épaisseur du tube d'échange de chaleur (3), le tube d'échange de chaleur (3) comprenant une troisième face et une quatrième face agencées le long d'une direction de largeur du tube d'échange de chaleur (3), une partie d'intersection de la première face et de la troisième face étant un premier bord latéral, le tube d'échange de chaleur (3) comprenant une première section (31), une section incurvée (33) et une deuxième section (32), une première extrémité de la première section (31) du tube d'échange de chaleur (3) étant raccordée à une première extrémité de la section incurvée (33), une deuxième extrémité de la première section (31) étant en communication avec le premier collecteur (1), une première extrémité de la deuxième section (32) du tube d'échange de chaleur (3) étant raccordée à une deuxième extrémité de la section incurvée (33), une deuxième extrémité de la deuxième section (32) étant en communication avec le deuxième collecteur (2), une direction de longueur de la première section (31) et une direction de longueur de la deuxième section (32) définissent un angle inclus entre elles, et des sections incurvées (33) adjacentes dans une direction d'épaisseur de la section incurvée (33) étant espacées ; et
une ailette (4) comprenant une première ailette (41) et une deuxième ailette (42), la première ailette (41) étant agencée entre des premières sections (31) adjacentes dans la direction de longueur du premier collecteur (1), la deuxième ailette (42) étant agencée entre des deuxièmes sections (32) adjacentes dans la direction de longueur du premier collecteur (1), et aucune ailette n'étant agencée entre des sections incurvées (33) adjacentes dans la direction de longueur du premier collecteur (1),
l'échangeur de chaleur étant **caractérisé en ce que**
la section incurvée (33) de l'échangeur de chaleur comprend une section (34) à incurver avant incurvation, la section (34) à incurver comprend une section saillante (341) et au moins deux sections de transition (342), une première extrémité de la section saillante (341) est raccordée à une première extrémité d'une section de transition (342), une deuxième extrémité de la une section de transition (342) est raccordée à la première extrémité de la première section (31), une deuxième extrémité de la section saillante (341) est raccordée à une première extrémité d'une autre section de transition (342), et une deuxième extrémité de l'autre section de transition (342) est raccordée à la première extrémité de la deuxième section (32),
dans lequel un plan parallèle à la direction de longueur du premier collecteur (1) et parallèle à la direction de longueur de la première section (31), et également perpendiculaire à une direction de largeur de la première section (31) est défini en tant que premier plan avant que la section incurvée (33) ne soit incurvée ; dans le premier plan, une ligne de projection d'un premier bord latéral de la section saillante (341) du tube d'échange de chaleur (3) n'est pas colinéaire avec une ligne de projection d'un premier bord latéral de la première section (31) du tube d'échange de chaleur (3), une distance minimale depuis la ligne de projection du premier bord latéral de la section saillante (341) du tube d'échange de chaleur (3) jusqu'à la ligne de projection du premier bord latéral de la première section (31) du tube d'échange de chaleur (3) est H, et une distance minimale depuis la ligne de projection du premier bord latéral de la première section (31) du tube d'échange de chaleur (3) jusqu'à la ligne de projection du premier bord latéral de la première section (31) d'un autre tube d'échange de chaleur (3) dans la direction de longueur du premier collecteur (1) est L, et H est supérieure ou égale à L.

2. Échangeur de chaleur selon la revendication 1, dans lequel H est inférieure à 5 fois TW, Tw étant une largeur du tube d'échange de chaleur (3).

3. Échangeur de chaleur selon la revendication 1 ou 2, dans lequel H est supérieure ou égale à 1,5 fois L.

4. Échangeur de chaleur selon l'une quelconque des revendications 1 à 3, dans lequel la section saillante (341) comprend une première section droite (3411) au moins en partie avant que la section incurvée (33) de l'échangeur de chaleur ne soit incurvée, une direction de longueur de la première section droite (3411) est globalement parallèle à la direction de longueur de la première section (31), et la pluralité de tubes d'échange de chaleur (3) présentent des directions cohérentes depuis des premières faces de leurs premières sections (31) respectives jusqu'à des premières faces de leurs premières sections droites (3411) respectives.

5. Échangeur de chaleur selon la revendication 4, dans lequel la première section droite (3411) présente une longueur de C avant incurvation, le tube d'échange de chaleur (3) présente une longueur de A avant que la section incurvée (33) du tube d'échange de chaleur (3) ne soit incurvée, et C est inférieure ou égale à 0,5 fois A.

6. Échangeur de chaleur selon l'une quelconque des revendications 1 à 3, dans lequel, avant que la section incurvée (33) de l'échangeur de chaleur ne soit incurvée, la section saillante (341) comprend une première section en forme d'arc (3412) au moins en partie, et la pluralité de tubes d'échange de chaleur (3) présentent des directions cohérentes depuis des premières faces de leurs premières sections (31) respectives jusqu'à des premières faces de leurs premières sections en forme d'arc (3412) respectives.

7. Échangeur de chaleur selon la revendication 4 ou 5, dans lequel la section de transition (342) comprend une deuxième section droite (3421) au moins en partie, et une direction de longueur de la deuxième section droite (3421) et la direction de longueur de la première section (31) définissent un angle inclus entre elles, ou la section de transition (342) comprend une deuxième section en forme d'arc (3422) au moins en partie.

8. Échangeur de chaleur selon l'une quelconque des revendications 1 à 3, dans lequel la première ailette (41) est une ailette ondulée s'étendant dans la direction de longueur de la première section (31) du tube d'échange de chaleur (3), et/ou la deuxième ailette (42) est une ailette ondulée s'étendant dans la direction de longueur de la deuxième section (32) du tube d'échange de chaleur (3), et une densité de la première ailette (41) est différente d'une densité de la seconde ailette (42).

9. Échangeur de chaleur selon l'une quelconque des revendications 1 à 3, dans lequel la première ailette (41) est une ailette d'insertion s'étendant dans une direction d'épaisseur de la première section (31) du tube d'échange de chaleur (3), et/ou la deuxième ailette (42) est une ailette d'insertion s'étendant dans une direction d'épaisseur de la deuxième section (32) du tube d'échange de chaleur (3).

10. Procédé de traitement d'un échangeur de chaleur selon l'une quelconque des revendications 1 à 9, comprenant le fait de :
préparer un échangeur de chaleur à traiter, dans lequel l'échangeur de chaleur à traiter comprend un premier collecteur, un deuxième collecteur, une pluralité de tubes d'échange de chaleur et une ailette, la pluralité de tubes d'échange de chaleur sont espacés le long d'une direction de longueur du premier collecteur, le tube d'échange de chaleur fait communiquer le premier collecteur avec le deuxième collecteur, le tube d'échange de chaleur comprend une première face et une deuxième face agencées en parallèle dans la direction de longueur du premier collecteur, le tube d'échange de chaleur comprend une première section, une section à incurver et une deuxième section, une première extrémité de la première section est raccordée à une première extrémité de la section à incurver, une deuxième extrémité de la première section est en communication avec le premier collecteur, une première extrémité de la deuxième section est raccordée à une deuxième extrémité de la section à incurver, une deuxième extrémité de la deuxième section est en communication avec le deuxième collecteur, l'ailette comprend une première ailette et une deuxième ailette, la première ailette est agencée entre des premières sections adjacentes dans la direction de longueur du premier collecteur, la deuxième ailette est agencée entre des deuxièmes sections adjacentes dans la direction de longueur du premier collecteur, et aucune ailette n'est agencée entre des sections à incurver adjacentes dans la direction de longueur du premier collecteur ;
translater une partie de la section à incurver du tube d'échange de chaleur d'une distance prédéfinie par rapport à la première section et à la deuxième section du tube d'échange de chaleur le long de la direction de longueur du premier collecteur, de telle sorte que la partie translatée de la section à incurver dévie de la première section du tube d'échange de chaleur dans la direction de longueur du premier collecteur ;
déplacer le premier collecteur vers le deuxième collecteur, et déplacer le deuxième collecteur vers le premier collecteur ; et
incurver la section à incurver du tube d'échange de chaleur dans la direction de longueur tout en réduisant un angle inclus entre la première section et la deuxième section du tube d'échange de chaleur à un angle prédéterminé, après translation de la partie de la section à incurver de la distance prédéfinie.

11. Procédé de traitement de l'échangeur de chaleur selon la revendication 10, dans lequel la partie d'au moins une d'une pluralité de sections à incurver est séquentiellement translatée de la distance prédéfinie par rapport à la première section et à la deuxième section le long de la direction de longueur du premier collecteur, ou les parties d'une pluralité de sections à incurver sont séquentiellement translatées de la distance prédéfinie par rapport à la première section et à la deuxième section le long de la direction de longueur du premier collecteur, et la distance prédéfinie est supérieure ou égale à un espacement entre des premières sections adjacentes dans la direction de longueur du premier collecteur.

12. Procédé de traitement de l'échangeur de chaleur selon la revendication 10, dans lequel avant que la section à incurver du tube d'échange de chaleur ne soit incurvé,
la section à incurver est tordue par rapport à la première section et à la deuxième section du tube d'échange de chaleur le long de la direction de longueur du premier collecteur, de telle sorte qu'un angle inclus entre une première face de la section à incurver du tube d'échange de chaleur et une première face de la première section du tube d'échange de chaleur est supérieur à 0 degré et inférieur ou égal à 90 degrés.

13. Procédé de traitement de l'échangeur de chaleur selon l'une quelconque des revendications 10 à 12, dans lequel un mandrin est placé sur la section à incurver et vient buter contre la partie de la section à incurver, lorsque la section à incurver du tube d'échange de chaleur est incurvé.

14. Procédé de traitement de l'échangeur de chaleur selon la revendication 13, dans lequel l'incurvation de la section à incurver du tube d'échange de chaleur comprend le fait de :
incurver la section à incurver du tube d'échange de chaleur, de manière à incurver un angle entre une direction de longueur de la première section et une direction de longueur de la seconde direction à un angle prédéfini A1 ;
retirer le mandrin ; et
continuer à incurver la section à incurver du tube d'échange de chaleur, de manière à incurver l'angle entre la direction de longueur de la première section et la direction de longueur de la deuxième section à un angle cible A2, dans lequel A2≥0°, et A2 est inférieur à A1.
